# EUROPEAN PATENT SPECIFICATION

(11) **EP 3 140 455 B1**
(45) Date of publication and mention of the grant of the patent: **15.07.2020**
(21) Application number: 15788962.7
(22) Date of filing: 06.05.2015
(51) Int. Cl.: D21H 17/70, C08K 9/02, D21H 13/12, D21H 17/33, D21H 17/67, D21H 17/00

(54) **A METHOD OF MAKING A THERMOPLASTIC FIBER COMPOSITE MATERIAL AND WEB**
VERFAHREN ZUR HERSTELLUNG EINES THERMOPLASTISCHEN FASERVERBUNDSTOFFES UND EINER FASERVERBUNDBAHN
PROCÉDÉ DE FABRICATION DE BANDE ET DE MATÉRIAU COMPOSITE DE FIBRE THERMOPLASTIQUE

(30) Priority: 08.05.2014 SE 1400228
(43) Date of publication of application: 15.03.2017
(73) Proprietor: Stora Enso Oyj, 00101 Helsinki (FI)
(72) Inventor: BACKFOLK, Kaj, 53100 Laapeenranta (FI)
(74) Representative: Steinrud, Henrik
(86) International application number: PCT/IB2015/053297
(87) International publication number: WO 2015/170262

(56) References cited:
- WO-A1-2012/039668
- WO-A1-2013/169203
- US-A- 3 697 364
- US-A- 3 943 079
- US-A- 4 510 020
- US-A1- 2002 088 584
- US-A1- 2006 183 816
- US-A1- 2007 151 681
- US-A1- 2008 233 821
- US-A1- 2010 193 116
- US-A1- 2012 090 800
- US-A1- 2013 062 030
- US-A1- 2013 139 983
- US-A1- 2013 312 925
- US-B1- 6 706 148

## Description

### Technical field

The present document relates to a method of making a composite comprising thermoplastic particles and lignocellulosic fibers.

### Background

Currently, wood-plastic composite material can be made either by making a masterbatch by mixing dry compounds and thus obtaining a masterbatch or intermediate product of thermoplastic granules, fillers, fibers and other additives. In some cases, this product can also be prepared to final composition, i.e. no further compounding with plastic is required. The problem with dry mixing or compounding is to ensure that wood fibers are evenly distributed into the plastic matrix. Another challenge is to ensure that the fiber is compatible with the plastic. In the latter case, compatibility agents or coupling agents are used to enhance the adhesion. The addition of these also possesses the same problem, i.e. the mixing of chemical into dry mixtures is difficult and quality depends on mixing efficiency. Fillers are often added to either reduce costs or adjust properties of the plastic such as optical-, mechanical, barrier-, or electrical properties. However, the mixing of the fillers into the matrix is challenging particularly for semi-dry or dry batches.

Another way to make a thermoplastic composite is to mix fibers and plastic compounds in wet phase and then dewater the said suspension prior to drying. One approach is to use a papermachine based process in which dewatering occurs on wire. However, the reinforcement effect of fiber is dependent on the fiber-fiber flocculation and fiber-pigment flocculation prior to immobilization and consolidation of the matrix. It is thus beneficial to have weak or very limited physical and/or mechanical interaction between fibers or, alternatively a 3D structure that is easily wetted by the plastic matrix.

US 6,103,155 discloses a wet forming process for producing a fiber reinforced thermoplastic resin sheet with no or reduced warpage. This sheet is produced by feeding a thermoplastic resin and a reinforcing fiber into a dispersion tank, to which an aqueous medium containing a surface active agent or thickener is added at a pre-determined ratio. The mixture is stirred to prepare a dispersion as a material solution. This solution is then pumped to a web-forming section, where the dispersion is fed onto an endless mesh belt, while controlling the suction and filtration process, the speed of feeding the dispersion onto the belt and speed of said mesh belt to achieve a fiber orientation that is advantageous.

In WO2012/122224 A1 another wet web forming method is disclosed, wherein hydrogen bonds between the natural fibers are inhibited, and bonds between the fibers and the plastic particles are promoted. In this method the size of the powdery plastic particles, and the use of a compatibility-improving agent are essential to achieve a homogenous mixture of natural fibers and plastic material. WO2012/122224 A1 describes that the natural fiber, plastic, liquid and compatibilizing agent are fed to a mixing tank, and that the mixture is stirred overnight. This mixture can then be diluted to so called headbox consistency and brought to a conventional Fourdrinier machine for forming a web which is pressed and dried to form composite thermoplastic sheets. There is thus a need for a simplified process of forming a thermoplastic composite material.

US2002/088584 is directed to a composite building material comprising a cementious matrix, cellulose fibers having voids that are at least partially filled with laoding substances that inhibit water from flowing therethrough.

US2013/139983 is directed to a process for producing filled paper, card and board, by first preparing a paper stock comprising biodegradable polyester fibers and/or polyalkylene carbonate fibers.

US2007/151681 is directed to a method and a device for loading a fibrous stock suspension including a plurality of cellulose fibers with calcium carbonate. The method includes adding calcium hydrioxide in liquid or dry form and/or calcium oxide into the fibrous stock suspension, and precipitating calcium carbonate from calcium hydroxide through carbon dioxide in a pressurized vessel.

US2012/090800 is directed to a web-type composite intermediate which is formed from fibers and plastic. The composite intermediate is formed by wet web formation from a substantially homogeneous liquid mixture which contains natural fibers, plastic particles having a diameter of less than approximately 1000 µm and an agent that improves compatibility between natural fibers and plastic particles.

US6706148 is directed to a method for affixing a mineral filler onto an acqueous cellulose fiber suspension, which is derived from papermaking.

### Summary

It is an object of the present disclosure, to provide an improved method for forming a thermoplastic composite material based on a web forming technique and more precisely a method of reducing the fiber-fiber contact and thus preventing strong inter-fiber bonding or/and flocculation in the composite or intermediate product. Another object of the present invention is to improve the dewatering and the dosing of fillers into the composite material.

The invention is defined by the appended independent claim. Embodiments are set forth in the appended dependent claims and in the following description and drawings.

According to a first aspect, there is provided a method for forming a thermoplastic composite material wherein the method comprises the steps of:
forming an aqueous organic fiber material suspension, wherein the organic fiber is a natural lignocellulosic fiber, wood fiber, bleached kraft fiber, dissolving pulp fiber or microfibrillated cellulose; bringing said fiber suspension in contact with at least one additive, said additive being introduced into said fiber suspension, whereby said additive reacts to form a precipitation product, wherein the precipitation product comprises a crystallized filler, and wherein the additives are carbon dioxide and lime milk, said carbon dioxide and lime milk being fed to the short circulation separately or simultaneously, wherein said precipitation product or filler is allowed to precipitate onto the fibers of the fiber suspension, thereby forming an intermediate suspension, comprising precipitated calcium carbonate onto said fibers, introducing, after the formation of the intermediate suspension, a plastic material which is a plastic particle material, a plastic fiber material or a mixture thereof and which is selected from the group of polyethylene (PE), polypropylene (PP), ethylene/propylene copolymer, polycarbonate (PC), polystyrene (PS), polyethylene terephthalate (PET), polylactic acid (PLA), polyhydroxybutylate, acrylonitrile/butadiene/styrene copolymer (ABS), styrene/acrylonitrile copolymer (SAN), polyoxymethylene (POM), biodegradable thermoplastics, starch-based thermoplastics, their derivatives and/or mixtures thereof into said intermediate suspension, thereby forming composite material.

This method allows for a fast, simple and efficient way of producing a wood-plastic composite material. This method allows for at-line or near site or in-line precipitated pigment particles to be formed on the surface of the fibers which provides for a more even distribution of fillers, improves dewatering of the wet web, lowers costs, and prevents too strong fiber-fiber bonds and flocks which can affect distribution of fibers in the composite web. Uncontrolled distribution of fillers and fibers might lead to product quality variations or reduced physical, optical or mechanical properties of the product. This thermoplastic web can be further used as intermediate product for making a master batch or then for directly pressing the web or sheets into a molded product. In the latter case, it is of essential importance that the distribution of fibers and fillers are evenly distributed.

According to one alternative the thermoplastic composite material may comprise a webmaterial formed in a fibrous web making machine. This allows for the composite material to be formed in a conventional papermaking machine, which is cost efficient.

The web material may also be formed in a machine comprising a wire for dewatering the said wet web or furnish.

The plastic material is any one of a plastic particle material, a plastic fiber material or a mixture thereof.

The method further comprises introducing said at least one additive in a liquid flow of a short circulation of a fibrous web forming process of a fibrous web machine, in an in-line production method for forming said reaction agent onto the fibers of the fiber suspension.

By utilizing an in-line production method there is provided a method which allows for an efficient mixing in the wet end of the paper making machine. The in-line production method also allows for a direct precipitation of a filler such as PCC onto the fibers of the suspension.

When there are two or more additives, the method further comprises allowing these to react with one another to form the precipitation product onto the fibers.

It has surprisingly been found that the use of carbonation onto fibers solves the aforementioned problems and prevents strong fiber-fiber flocs and bonds in a wet forming of a thermoplastic web. By utilizing pre-determined conditions, it is possible to precipitate filler on the fibers and hence prevent strong fiber-fiber interaction.

The precipitation product comprises a crystallized filler, or mixtures thereof, and wherein the additives are carbon dioxide and lime milk, said carbon dioxide and lime milk being fed to the short circulation separately or simultaneously, wherein said precipitation product or filler is allowed to precipitate onto the fibers of the fiber suspension, thereby forming the intermediate suspension, comprising precipitated calcium carbonate onto said fibers.

By precipitating PCC onto the fibers it is possible to further enhance dewatering and reduce costs of the thermoplastic composite.

According to yet an embodiment a coupling agent may be introduced into the intermediate suspension simultaneously with, or substantially directly after, the introduction of said additive.

The introduction of a coupling agent may improve the adherence between the plastic material and the fiber, and thus improve the characteristics of the composite material. The said coupling agent can also be utilized to control the morphology and/or chemistry of the fillers.

According to an alternative embodiment of the first aspect, the method may comprise the step of, before the step of bringing said fiber solution in contact with at least one additive, separating said fiber suspension into two separate flows, a first flow which is subsequently brought into contact with said additive, and a second flow, which is subsequently re-introduced into the intermediate suspension.

According to this alternative it may further be possible to precipitate the PCC only on one fraction such as refined or fibrillated fiber or nanofibers, whereas large fibers (normal) are remain untreated by the process. Alternatively, the larger (normal) fiber fraction is treated by the process, which fraction is later mixed with untreated refined/fibrillated or nanofibers.

The organic fiber used in the first aspect of the invention is a natural lignocellulosic fiber, wood fiber, bleached kraft fiber, dissolving pulp fiber, microfibrillated cellulose. The liquid flow may comprise at least one of the following components: virgin pulp suspension (long-fiber pulp, short-fiber pulp, mechanical pulp, chemo mechanical pulp, chemical pulp, microfiber pulp, nanofiber pulp), recycled pulp suspension (recycled pulp, reject, fiber fraction from the fiber recovery filter), additive suspension and solids-containing filtrate.

The plastic material is any one of a plastic selected from the group of polyethylene (PE), polypropylene (PP), ethylene/propylene copolymer, polycarbonate (PC), polystyrene (PS), polyethylene terephthalate (PET), polylactic acid (PLA), polyhydroxybutylate, acrylonitrile/butadiene/styrene copolymer (ABS), styrene/acrylonitrile copolymer (SAN), polyoxymethylene (POM), biodegradable thermoplastics, starch-based thermoplastics, their derivatives and/or mixtures thereof.

According to an alternative embodiment the plastic-fiber composite suspension may be dewatered and pressed to a product in or after the paper machine. The web or sheet can be further laminated to provide a composite product.

According to another embodiment the plastic fiber composite suspension may be dewatered, dried and possible used as a master batch, and thereafter extruded to form a product.

According to yet another embodiment the plastic fiber composite suspension may be dewatered in a mould after which an object is formed.

According to another alternative embodiment the plastic fiber composite suspension may be transferred to a headbox of a fiber web machine.

According to this embodiment said plastic fiber composite solution may further fed onto a wire section of a fiber web machine, thereby forming a plastic fiber composite web material.

The plastic fiber composite material or thermoplastic composite material thereby has improved qualities over prior art composites.

### Brief Description of the Drawings

Embodiments of the present solution will now be described, by way of example, with reference to the accompanying schematic drawings.
Fig. 1 shows schematically a short circulation arrangement according to prior art.
Fig. 2 shows schematically a short circulation arrangement according to one embodiment of the invention.
Figs 3a-b shows schematically a short circulation arrangement according to one alternative embodiment of the invention.
Fig. 4 shows schematically a short circulation arrangement according to yet an alternative embodiment of the invention.
Fig. 5 shows schematically a short circulation arrangement according to yet another alternative embodiment of the invention.
Fig. 6 shows a schematic flow scheme of the present invention.
Figs 7a and 7b are a schematic side views of a conventional paper making machine.

### Description of Embodiments

### Definition of precipitated calcium carbonate (PCC)

Almost all PCC is made by direct carbonation of hydrated lime, known as the milk of lime process. The lime is slaked with water to form Ca(OH)₂ and in order to form the precipitated calcium carbonate (insoluble in water) the slaked lime is combined with the (captured) carbon dioxide. The PCC may then be used in paper industry as a filler or pigmentation, mineral or coating mineral or in plastic or barrier layers. It can also be used as filler in plastics or as additive in home care products, tooth pastes, food, pharmaceuticals, paints, inks etc.

### Definition of in-line precipitated calcium carbonate process

By "in-line production" is meant that the precipitated calcium carbonate (PCC) is produced directly into the flow of the paper making stock, i.e. the captured carbon dioxide is combined with slaked lime milk inline, instead of being produced separately from the paper making process. Separate production of PCC further requires the use of retention chemicals to have the PCC adsorbed or fixed onto the fibers. An in-line PCC process is generally recognized as providing a clean paper machine system, and there is a reduced need of retention chemicals. An in-line PCC process is for instance disclosed in WO2011/110744.

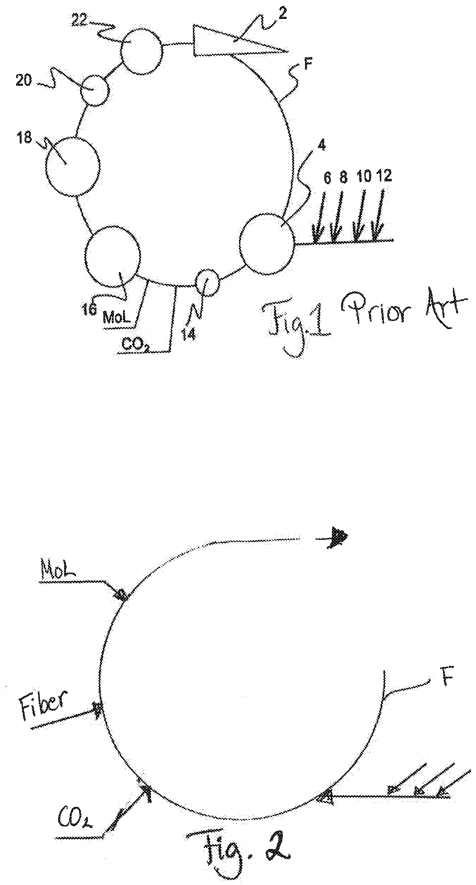

Fig. 1 shows a prior art method for inline production of precipitated calcium carbonate, as disclosed in US2011/0000633 and a schematic process arrangement for a paper making machine 2. The white water F, is carried to e.g. a mixing tank or filtrate tank 4, to which various fibrous components are introduced for the paper making stock preparation. From fittings at least one of virgin pulp suspension (long-fiber pulp, short-fiber pulp, mechanical pulp, chemomechanical pulp, chemical pulp, microfiber pulp, nanofiber pulp), recycled pulp suspension (recycled pulp, reject, fiber fraction from the fiber recovery filter), regenerated cellulose, dissolving pulp, additive suspension and solids-containing filtrate is carried to the mixing tank, and from there conveyed by a mixing pump 14 to a vortex cleaner 16, where heavier particles are separated. The accept of the vortex cleaning continues to a gas separation tank 18, where air and/or other gases are removed from the paper making stock. The paper making stock is then transported to a feed pump 20 of the headbox, which pumps the paper making stock to a so-called headbox screen 22, where large sized particles are separated from the paper making stock. The accept faction is carried to the paper making machine 2 through its headbox. The short circulation of fiber web machines producing less demanding end products may, however, not have a vortex cleaner, gas separation plant and/or headbox.

In the prior art process the PCC production is performed in the short circulation of the paper making machine, before the vortex cleaning plant 16. The carbon dioxide (CO₂) is injected on the pressure side of the vortex cleaner and the lime milk (MoL) is injected a few meters after the carbon dioxide has dissolved in the same pipe. It is however conceivable that this PCC production could take place closer to the headbox, or that the distance between the injectors is very small, virtually injecting carbon dioxide and lime milk at the same location in the short circulation. This depends on the requirements of the end product and the design of the paper making machine.

Where two or more additives are fed into the short circulation these are allowed to react with one another, which means that they are fed into the short circulation in a manner which allows for the additives to react, in the case of lime milk and carbon dioxide, such that precipitated calcium carbonate is formed onto the fibers as the reaction agent.

According to one embodiment of the present invention, an in-line PCC process is combined with the dosage of fibers into the in-line PCC process.

In one embodiment of the present invention, lime milk, carbon dioxide and fiber solution are injected separately into the short circulation and fibrous web of the paper making machine.

In an alternative embodiment, the fiber solution is provided e.g. in the preparation of the paper making stock, and thus is present in the paper making stock and the carbon dioxide and lime milk are injected separately or simultaneously into the short circulation.

In all of the above described embodiments it is to be understood that the order of injection of the additives, i.e. lime milk, carbon dioxide, fiber solution and possibly other additives may occur in a different order or at a different stage in the short circulation. It is conceivable that the injection occurs very close to the headbox, or that the fiber solution dosage is prior to the addition of the carbon dioxide or that the distances between the "injection points" is shorter or longer than described above. Thus the fiber solution, lime milk and carbon dioxide may be injected into the short circulation substantially at the same injection point.

The point or point where the injection takes place thus forms a "PCC reaction zone".

In one embodiment of the present invention, as shown in Fig. 2 lime milk, carbon dioxide and fiber solution are injected separately into the short circulation and fibrous web of the paper making machine.

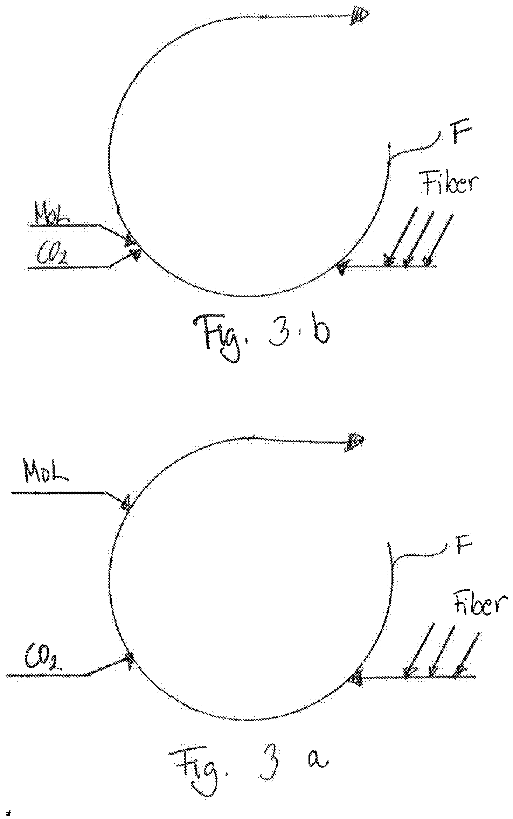

In an alternative embodiment, as shown in Figs 3a and 3b the fibers are provided e.g. in the preparation of the paper making stock, and thus is present in the paper making stock and the carbon dioxide and lime milk are injected separately or simultaneously into the short circulation.

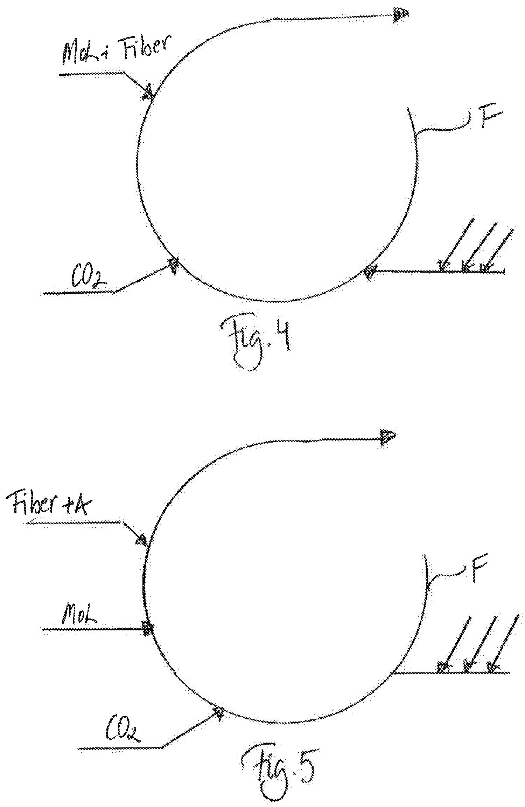

In yet an alternative embodiment, as shown in Fig. 4 the lime milk and the fibers are mixed before the injection into the short circulation and the carbon dioxide is injected separately from this mixture.

In yet another alternative embodiment, as shown in Fig. 5, the fibers are mixed with other additives and this mixture is injected separately from the lime milk and carbon dioxide.

Alternatively other fillers may be used, such as silicate, calcium silicate, or other types of fillers based on alkaline earth carbonates, such as magnesium carbonate.

The first additive may be sodium silicate and the second additive an acidic media thereby forming silica.

The first additive may be calcium hydroxide, CaOH, and the second additive may be carbon dioxide CO2, and a third additive may be sodium silicate thereby forming calcium silicate.

The first additive may be another hydroxide of an alkaline earth metal (e.g. MgOH), and the second additive may be carbon dioxide, CO2, thereby forming other types of fillers based on alkaline earth carbonates, such as e.g. magnesium carbonate.

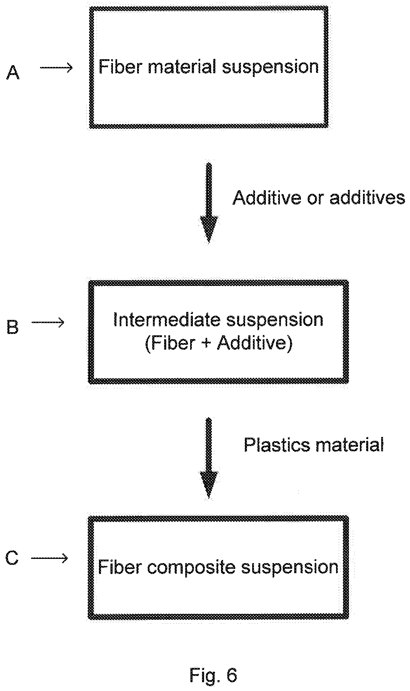

In Fig. 6 an overview of the method is shown. In step A a fiber material suspension is provided. This suspension may comprise any of the aforementioned fibers. The fiber suspension is then contacted with one or more additives, either as an in-line process or in a batch operation. In step B the formed intermediate suspension comprises the fibers and the additives, where the additives may be a precipitation agent, such as PPC which may have been formed onto the fibers of the fiber suspension.

In step C the intermediate suspension is contacted with a plastics material, which may be any of the aforementioned materials. The resulting material is a suspension comprising a composite of plastic and fiber, which may then be further processed, for instance as described below. If the process is an in-line production method all of these steps may be performed more or less simultaneously. It is however preferred that the intermediate suspension, i.e. the precipitation product is formed before the plastics material is added. In the in-line production method the formation of the intermediate suspension can be very rapid, thus allowing for a very efficient way to form the plastics fiber composite.

According to one alterative the method provides for a separation of material or suspension flows, such that in step A before the fiber suspension is contacted with with at least one additive, the fiber suspension is separated into two separate flows, a first flow which is subsequently brought into contact with said additive, and a second flow, which is subsequently re-introduced into the intermediate suspension. According to this alternative it may further be possible to precipitate the PCC only on one fraction such as nanofibers, whereas large fibers (normal) are remain untreated by the process.

In the present disclosure different types of plastics materials may be used to form the thermoplastic composite material. Such materials include the aforementioned materials, but may also include a fiber type of thermoplastic material or mixture of two or several thermoplastic materials. The material may also contain a coupling agent that improves the adhesion between fibers or fiber-filler and plastic.

Alternatively the additive may be introduced into the fiber suspension in for instance a mixing tank prior to the introduction into the papermaking machine, or headbox of a fibrous web machine. According to yet an alternative the fiber suspension, additive and plastic material are all mixed in a headbox of a papermaking machine.

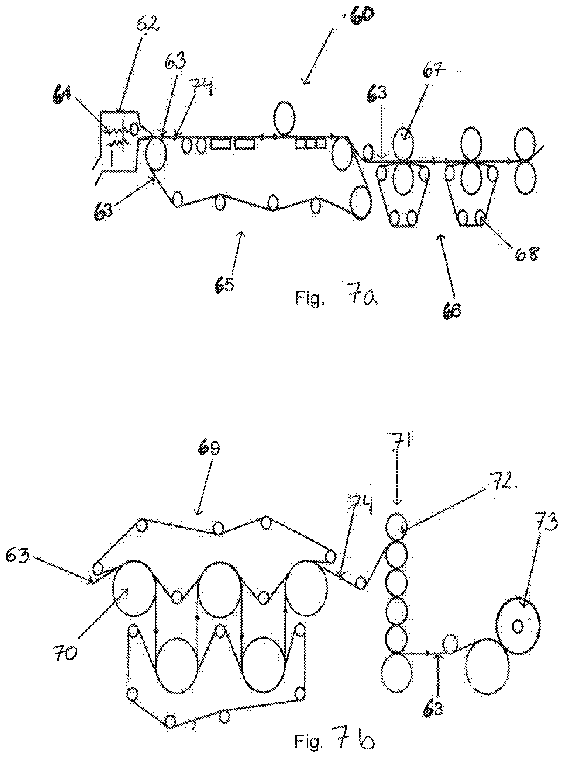

According to one embodiment a thermoplastic web according to the present disclosure may be produced in a conventional type of paper making machine. An example of such a paper machine 60 is shown in Figs 7a and 7b, where Fig. 7b is a continuation of Fig. 7a.

Fig. 7a illustrates a forming section 65 or the so called wet end of the paper making machine and a pressing or wet pressing section 66. In the head box 62 a stock solution or suspension 4 is usually provided and prepared. The stock solution 64 may for instance be heated to a desired temperature, or run through sieves to remove impurities etc. In the head box 62 different types of paper making additives or chemical aid may also be added to the stock solution, for instance, but not limited to additives such as retention chemicals, fillers and surface active agents or polymers.

In the present invention the plastic fiber composite solution may be transferred to the headbox 62.

Other types of additives that may be added in the wet end or size press may be additives such as starch, PVOH, CMC, or latex (SB, SA), crosslinkers, optical brighteners or colorants, biocides, fixatives, lubricants, preservatives, dispersants, etc.

The stock suspension 64, containing the plastic fiber composite solution, is provided onto a wire 63 in the forming section 65. A wet web 63 is thereby formed on the wire. An arrow 64 indicates the direction of the web or the machine direction.

After the forming section 65 the web passes through a pressing section 66, or a wet pressing section. The pressing operation may be performed by passing the wet web 63 through a series of nips, which are formed by rolls 67 pressing against each other, and are aided by press felts 68 which absorb the pressed water from the web.

After the wet pressing operation the web or sheet material 63, may be passed through a drying section 69. The drying may be performed in many different manners, but one way is to use drying cylinders 70 and steam. After the drying section 69 the web or sheet 63 may pass through a calender section and a series of calenders (heavy steel rolls) 72 to smooth the sheet, and finally rolled onto a roll or reel 73.

## Claims

1. A method for forming a thermoplastic composite material, wherein the method comprises the steps of:
forming an aqueous organic fiber material suspension, wherein the organic fiber is a natural lignocellulosic fiber, wood fiber, bleached kraft fiber, dissolving pulp fiber or microfibrillated cellulose;
bringing said fiber suspension in contact with at least one additive, said additive being introduced into said fiber suspension, whereby said additive reacts to form a precipitation product, wherein the precipitation product comprises a crystallized filler, and wherein the additives are carbon dioxide and lime milk, said carbon dioxide and lime milk being fed to the short circulation separately or simultaneously, wherein said precipitation product or filler is allowed to precipitate onto the fibers of the fiber suspension, thereby forming an intermediate suspension, comprising precipitated calcium carbonate onto said fibers;
introducing, after the formation of the intermediate suspension, a plastic material which is a plastic particle material, a plastic fiber material or a mixture thereof and which is selected from the group of polyethylene (PE), polypropylene (PP), ethylene/propylene copolymer, polycarbonate (PC), polystyrene (PS), polyethylene terephthalate (PET), polylactic acid (PLA), polyhydroxybutylate, acrylonitrile/butadiene/styrene copolymer (ABS), styrene/acrylonitrile copolymer (SAN), polyoxymethylene (POM), biodegradable thermoplastics, starch-based thermoplastics, their derivatives and/or mixtures thereof into said intermediate suspension, thereby forming a composite material.

2. The method as claimed in claim 1, wherein the thermoplastic composite material comprises a web material formed in a fibrous web papermaking machine.

3. The method as claimed in any one of the preceding claims, wherein the method comprises introducing said at least one additive in a liquid flow of a short circulation of a fibrous web forming process of a fibrous web machine, in an in-line production method for forming said reaction agent onto the fibers of the fiber suspension.

4. The method as claimed in any one of the preceding claims wherein a coupling agent is introduced into the intermediate suspension simultaneously with, or substantially directly after, the introduction of said additive.

5. The method as claimed in any one of the preceding claims, wherein said method further comprises, before the step of bringing said fiber suspension in contact with at least one additive, separating said fiber suspension into two separate flows, a first flow which is subsequently brought into contact with said additive, and a second flow, which is subsequently re-introduced into the intermediate suspension.

6. The method according to claim 2, wherein the plastic fiber composite suspension is dewatered and pressed to a product in the paper machine.

7. The method as claimed in any one of claims 1-5, wherein the plastic fiber composite suspension is dewatered and thereafter extruded to form a product.

8. The method as claimed in any one of claims 1-5, wherein the plastic fiber composite suspension is dewatered in a mould after which an object is formed.

9. The method as claimed in any one of claims 1-5, wherein said plastic fiber composite suspension is transferred to a headbox of a fiber web machine.

## Patentansprüche

1. Verfahren zum Bilden eines thermoplastischen Verbundmaterials, wobei das Verfahren die folgenden Schritte umfasst:
Bilden einer wässrigen Suspension aus organischem Fasermaterial, wobei die organische Faser eine natürliche Lignocellulosefaser, Holzfaser, gebleichte Kraftfaser, Chemiezellstofffaser oder mikrofibrillierte Cellulose ist;
Inkontaktbringen der Fasersuspension mit mindestens einem Zusatz, wobei der Zusatz in die Fasersuspension eingebracht wird, wodurch der Zusatz reagiert, um ein Fällungsprodukt zu bilden, wobei das Fällungsprodukt einen kristallisierten Füllstoff umfasst, und wobei die Zusätze Kohlendioxid und Kalkmilch sind, wobei das Kohlendioxid und die Kalkmilch separat oder gleichzeitig dem kurzen Siebkreislauf zugeführt werden, wobei es dem Fällungsprodukt oder Füllstoff ermöglicht wird, auf die Fasern der Fasersuspension auszufällen, wodurch eine Zwischensuspension, die ausgefälltes Calciumcarbonat umfasst, auf den Fasern gebildet wird;
Einbringen, nach dem Bilden der Zwischensuspension, eines Kunststoffmaterials, das ein Kunststoffpartikelmaterial, ein Kunststofffasermaterial oder eine Mischung davon ist und das ausgewählt ist aus der Gruppe aus Polyethylen (PE), Polypropylen (PP), Ethylen/Propylen-Copolymer, Polycarbonat (PC), Polystyrol (PS), Polyethylenterephthalat (PET), Polymilchsäure (PLA), Polyhydroxybutylat, Acrylnitril/Butadien/Styrol-Copolymer (ABS), Styrol/Acrylnitril-Copolymer (SAN), Polyoxymethylen (POM), biologisch abbaubaren Thermoplasten, stärkebasierten Thermoplasten, deren Derivaten und/oder Mischungen davon, in die Zwischensuspension, wodurch ein Verbundmaterial gebildet wird.

2. Verfahren nach Anspruch 1, wobei das thermoplastische Verbundmaterial ein Bahnmaterial umfasst, das in einer Faserbahn-Papierherstellungsmaschine gebildet wird.

3. Verfahren nach einem der vorhergehenden Ansprüche, wobei das Verfahren ein Einbringen des mindestens einen Zusatzes in einen Flüssigkeitsstrom eines kurzen Siebkreislaufs eines Faserbahn-Bildungsprozesses einer Faserbahnmaschine in einem Inline-Herstellungsverfahren zur Bildung des Reaktionsmittels auf den Fasern der Fasersuspension umfasst.

4. Verfahren nach einem der vorhergehenden Ansprüche, wobei ein Kopplungsmittel gleichzeitig mit, oder im Wesentlichen direkt nach, der Einbringung des Zusatzes in die Zwischensuspension eingebracht wird.

5. Verfahren nach einem der vorhergehenden Ansprüche, wobei das Verfahren, vor dem Schritt des Inkontaktbringens der Fasersuspension mit mindestens einem Zusatz, ferner ein Auftrennen der Fasersuspension in zwei getrennte Ströme umfasst, in einen ersten Strom, der anschließend in Kontakt mit dem Zusatz gebracht wird, und einen zweiten Strom, der anschließend erneut in die Zwischensuspension eingebracht wird,.

6. Verfahren nach Anspruch 2, wobei die Kunststofffaser-Verbundwerkstoffsuspension entwässert und in der Papiermaschine zu einem Produkt gepresst wird.

7. Verfahren nach einem der Ansprüche 1-5, wobei die Kunststofffaser-Verbundwerkstoffsuspension entwässert und danach extrudiert wird, um ein Produkt zu bilden.

8. Verfahren nach einem der Ansprüche 1-5, wobei die Kunststofffaser-Verbundwerkstoffsuspension in einer Form entwässert wird, wonach ein Produkt gebildet wird.

9. Verfahren nach einem der Ansprüche 1-5, wobei die Kunststofffaser-Verbundwerkstoffsuspension in einen Stoffauflaufkasten einer Fasergewebemaschine transferiert wird.

## Revendications

1. Procédé pour la formation d'un matériau composite thermoplastique, le procédé comprenant les étapes consistant à :
former une suspension aqueuse de matériau de fibre organique, où la fibre organique est une fibre lignocellulosique naturelle, une fibre de bois, une fibre kraft blanchie, une fibre de pâte en dissolution ou une cellulose microfibrillée ;
mettre ladite suspension de fibre en contact avec au moins un additif, ledit additif étant introduit dans ladite suspension de fibre, moyennant quoi ledit additif réagit pour former un produit de précipitation, où le produit de précipitation comprend une charge cristallisée, et où les additifs sont le dioxyde de carbone et le lait de chaux, lesdits dioxyde de carbone et lait de chaux étant fournis à la circulation courte séparément ou simultanément, où on laisse ledit produit de précipitation ou ladite charge précipiter sur les fibres de la suspension de fibre, pour ainsi former une suspension intermédiaire, comprenant du carbonate de calcium précipité sur lesdites fibres ;
introduire, après la formation de la suspension intermédiaire, un matériau plastique qui est un matériau de particules plastiques, un matériau de fibre plastique ou un mélange de ceux-ci et qui est choisi dans le groupe comprenant le polyéthylène (PE), le polypropylène (PP), un copolymère d'éthylène/propylène, le polycarbonate (PC), le polystyrène (PS), le polytéréphtalate d'éthylène (PET), le polyacide lactique (PLA), le polyhydroxybutylate, un copolymère d'acrylonitrile/butadiène/styrène (ABS), un copolymère de styrène/acrylonitrile (SAN), le polyoxyméthylène (POM), des thermoplastiques biodégradables, des thermoplastiques à base d'amidon, leurs dérivés et/ou des mélanges de ceux-ci dans ladite suspension intermédiaire, pour ainsi former un matériau composite.

2. Procédé selon la revendication 1, dans lequel le matériau composite thermoplastique comprend un matériau en bande formé dans une machine de fabrication de papier en bande fibreuse.

3. Procédé selon l'une quelconque des revendications précédentes, le procédé comprenant l'introduction dudit au moins un additif dans un écoulement liquide d'une circulation courte d'un processus de formation de bande fibreuse d'une machine à bande fibreuse, dans un procédé de production en ligne pour former ledit agent de réaction sur les fibres de la suspension de fibre.

4. Procédé selon l'une quelconque des revendications précédentes, dans lequel un agent de couplage est introduit dans la suspension intermédiaire simultanément à l'introduction dudit additif ou sensiblement directement après celle-ci.

5. Procédé selon l'une quelconque des revendications précédentes, ledit procédé comprenant en outre, avant l'étape de mise de ladite suspension de fibre en contact avec au moins un additif, la séparation de ladite suspension de fibre en deux écoulements distincts, un premier écoulement qui est ensuite mis en contact avec ledit additif, et un deuxième écoulement, qui est ensuite réintroduit dans la suspension intermédiaire.

6. Procédé selon la revendication 2, dans lequel la suspension composite de fibre plastique est déshydratée et pressée en un produit dans la machine à papier.

7. Procédé selon l'une quelconque des revendications 1 à 5, dans lequel la suspension composite de fibre plastique est déshydratée, puis extrudée pour former un produit.

8. Procédé selon l'une quelconque des revendications 1 à 5, dans lequel la suspension composite de fibre plastique est déshydratée dans un moule après quoi un objet est formé.

9. Procédé selon l'une quelconque des revendications 1 à 5, dans lequel ladite suspension composite de fibre plastique est transférée vers une caisse de tête d'une machine à bande de fibre.
